# EUROPEAN PATENT SPECIFICATION

(11) **EP 3 651 003 B1**
(45) Date of publication and mention of the grant of the patent: **06.04.2022**
(21) Application number: 18204793.6
(22) Date of filing: 07.11.2018
(51) Int. Cl.: G06F 3/042, G06F 3/041

(54) **TOUCH-SENSITIVE INPUT DEVICE, SCREEN AND METHOD**
BERÜHRUNGSEMPFINDLICHE EINGABEVORRICHTUNG, BILDSCHIRM UND VERFAHREN
DISPOSITIF, ÉCRAN ET PROCÉDÉ D'ENTRÉE TACTILE

(43) Date of publication of application: 13.05.2020
(73) Proprietor: Vestel Elektronik Sanayi ve Ticaret A.S., 45030 Manisa (TR)
(72) Inventor: YILDIZ, Kadir, 45030 Manisa (TR); DERELI, Ulas, 45030 Manisa (TR)
(74) Representative: Kehl, Ascherl, Liebhoff & Ettmayr Patentanwälte Partnerschaft mbB

(56) References cited:
- EP-A1- 2 824 548
- CN-B- 101 963 867
- DE-A1- 19 962 552
- DE-A1-102004 005 501
- US-A1- 2001 022 579
- US-A1- 2002 033 805
- US-A1- 2005 057 528
- US-A1- 2017 025 097
- US-B1- 6 421 042

## Description

### TECHNICAL FIELD

The invention relates to a touch-sensitive input device for a screen. Further, the invention relates to a respective screen and to a respective method.

### BACKGROUND

Although applicable to any type of touch screen, the present invention will mainly be described in conjunction with large screens of digital signage products.

Digital signage products such as interactive white boards are increasingly used in schools, meeting rooms, airports etc. They are used for education, presentations or business information display. Such digital signage displays may comprise a controller that allows user interaction with the display. Such controllers may e.g. be provided in a dedicated computer or may be integrated into the digital signage display.

Digital signage products usually comprise a touch sensor for easily detecting user input, e.g. with the finger, without the user being required to use any dedicated input devices. There exist different touch technologies, wherein the most widely adopted touch sensing technology for large screens uses IR (InfraRed) technology. Such IR based input devices are cheap and the installation may easily be performed on any flat display surface. Further, IR-based touch sensors can be easily produced for and be used with displays of almost every size.

IR-based touch devices usually comprise a series of transmitters and a corresponding series of receivers which are linearly arranged on the two opposite edges of the display. The transmitters emit IR rays or light and the receivers receive the emitted rays or light, as long as no object obstructs the path of the rays. If an object is located between the transmitter and the receiver, e.g. a finger of a user, it will block the rays. Consequently, the receivers will not receive the rays from the transmitters and an attached processing unit of the touch system may determine the position of the object by analyzing which receivers still receive the emitted IR light or not. Therefore, when a user touches the screen or display, the user blocks the respective IR ray(s) and the system may identify the respective position on the screen or display.

With large displays, like 75" or 98" displays, the surface of the respective display may not be flat because of production process fails or mounting problems. Further, the display may comprise a power supply, backlight units and the like. These elements may heat up the display. In addition, the environment may further heat up the display e.g. depending on the ambient temperature and incident sunlight. Therefore, the surface may have indentations or elevations that may e.g. be caused by the heat and the respective thermal stress.

The non-flat or curved surface may change the direction of emission of the transmitters or the direction of reception of the receivers, e.g. if the edges of the display are elevated or lowered and therefore twisting the frame of the display. The result may be a change of the ray direction. This means that some receivers may not receive the rays and the system may suppose that an object may block the rays. Therefore, touch events may not be detected or false touch events may be detected.

Document US 2017 / 025 097 A1 discloses a control device that allows positioning sending and receiving elements of a 3D mid-air input device. Document US 6 421 042 B1 discloses a coordinate-position inputting device with a light emitting device and at least two pickup devices. Document CN 101 963 867 B discloses an input device. Document DE 10 2004 005501 A1 discloses an input device with mechanical input elements. Document DE 199 62 552 A1 discloses a touch-screen with input element, wherein at least one input element is vertically movable. Document US 2005 / 057 528 A1 discloses a screen with a touch sensitive user interface for command input via local touching of the user interface and with electrical means for generating a haptically perceptible signal. Document EP 2 824 548 A1 discloses a coordinate detecting device for a display surface with two optical sensors including light emitting and receiving devices. Document US 2001 / 022 579 A1 discloses an apparatus for inputting coordinates with an optical unit that comprises a light source and a light receiver. Document US 2002 / 033 805 A1 discloses an electronic blackboard that optically detects input information on a display surface by optically determining the corresponding coordinates.

There is a need for improved touch-sensitive devices.

### SUMMARY OF THE INVENTION

The above stated problem is solved by the features of the independent claims. It is understood, that independent claims of a claim category may be formed in analogy to the dependent claims of another claim category.

The present invention is based on the finding that elevated or lowered edges or corners or spots on the surface of the screen may pose problems when using the touch screen device. It is understood, that the terms screen or display may be used interchangeably with regard to the present invention.

The present invention discloses the touch-sensitive input device that may automatically correct elevated or lowered corners of its frame.

Usually the frame will be mounted on a screen or display device. The frame may for example be mounted on the housing of a frame of a whiteboard with a projector projecting images onto the whiteboard from the front or the back (with translucent whiteboards). Alternatively, the frame may be mounted around an active display, like e.g. an LCD display or an OLED display or any other type of display.

The frame carries the light emitters. It is understood, that any adequate number of light emitters may be provided, depending on the respective application. The number of light emitters will usually mainly depend on the required resolution of the touch-sensitive input device and the size of the display or screen on which the touch-sensitive input device is mounted. The same applies to the light receivers, which may also be called light sensors, which are also mounted on the frame on an edge opposite to the edge on which the light emitters are mounted. It is understood, that the light emitters and the light receivers may operate in the infrared light spectrum. It is also understood, that any other light spectrum may also be used.

Depending on the application, the light emitters and the light receivers may be provided only on one first edge and the opposing second edge or on two neighboring first edges and two neighboring second edges. In the first case touch events may be detected only on one axis. In the second case two sets of light beams will be emitted by the light emitters that will be orthogonal to each other and touch events may be detected in a two-dimensional coordinate system. Such an arrangement may also be called a matrix like arrangement with light beams being emitted in X direction and light beams being emitted in Y direction.

During normal operation - as indicated above - the touch-sensitive input device will determine if a touch event happened based on the light emitted by the light emitters and based on which ones of the light receivers that receive the emitted light.

Usually, a calibration will be necessary to calibrate the touch-sensitive input device with regard to the screen or display on which the touch-sensitive input device is used. To this end, markers may be shown on the screen or display and a user may be required to provide an input on the shown markers. This allows aligning the coordinate system of the screen or display with the coordinate system of the touch-sensitive input device.

With increasing size of the display, the negative influence of small geometrical distortions on the quality of signal acquisition of the touch-sensitive input device increases. Therefore, especially with large digital signage screens it is increasingly important to mechanically calibrate the frame of the touch-sensitive input device.

The touch-sensitive input device therefore provides the calibration processor that is provided for mechanically calibrating the touch-sensitive input device with regard to the surface of the screen or display. The calibration processor according to the present invention therefore not necessarily performs any calibration of the coordinate system of the touch-sensitive input device with regard to the coordinate system of the screen or display. However, the calibration processor may also perform such additional calibrations, e.g. after mechanically calibrating the touch-sensitive input device.

To allow for a mechanical calibration of the touch-sensitive input device, at least one electric actuator is provided on at least one edge or corner of the frame. Usually, multiple electric actuators on multiple edges will be provided. The electric actuators are mechanically arranged to elevate or lower the respective edge of the frame. It is understood, that any adequate mechanical arrangement may be provided, such an arrangement may e.g. comprise guides, slides, and/or gears and the like. In any case, the electric actuators may be controlled by the calibration processor as required.

The calibration processor may therefore elevate or lower edges and/or corners of the frame as required. In a calibration mode the calibration processor may therefore control the light emitters to emit light and may verify which of the light receivers receives the emitted light. It is understood, that the mechanical calibration should be performed without any user touching the surface of the screen or display. This fact may be noted in the instructions of the touch-sensitive input device. As alternative or in addition, a respective note may be provided to the user via the screen or display.

In the calibration mode, i.e. without a touch event being present, every light receiver should receive the emitted light from the light emitters. If in the calibration mode a light receiver does not receive the emitted light as expected, a mechanical distortion of the frame may be present. Such a distortion may e.g. lead to a light emitter emitting the light into the surface of the screen or away from the surface of the screen instead of parallel to the screen's surface.

By analyzing in the calibration mode, which light receiver receives the emitted light the calibration processor may therefore determine, if a mechanical distortion of the frame of the touch-sensitive input device is present and where the mechanical distortion is present.

The calibration processor may then control the respective electric actuators accordingly to compensate the mechanical distortion. After compensating the mechanical distortion, the light receivers and the respective light emitters will be aligned to each other and touch events may be reliably detected.

With the present invention it is therefore possible to increase the accuracy of the touch-sensitive input device even for large screens that may suffer major mechanical distortions.

Further embodiments of the present invention are subject of the further subclaims and of the following description, referring to the drawings.

In an embodiment, the light emitters may each be configured to emit a focused and directed beam to a respective one of the light receivers, and the calibration processor may be configured to control in the calibration mode all light emitters to emit light concurrently and to evaluate the output signals of the light receivers concurrently to determine, which of the light receivers receives the emitted light.

The light emitters may e.g. comprise infrared laser diodes or infrared LEDs (light emitting diodes) with lenses that focus the emitted light onto a respective one of the light receivers. In this case, a single light emitter will provide a single light receiver with an input signal, i.e. the emitted light.

With such an arrangement of light emitters and light receivers, the resolution of the touch-sensitive input device for detecting touch events will depend on the number of light emitters and light receivers. This numbers may be adapted according to the respective application's requirements.

Since the light emitted by one of the light emitters does not interfere with the light emitted by another one of the light emitters, all light emitters may emit light at the same time and all light receivers may be evaluated at the same time.

The calibration processor may for example comprise a control interface that couples the calibration processor with every one of the light emitters. Such a control interface may be a parallel interface that has a direct connection to every one of the light emitters. As alternative, such a control interface may also comprise a serial interface that e.g. provides the respective control data to a controller of the light emitters. In this case, the controller of the light emitters will receive the serial control signals and control the individual light emitters accordingly.

The coupling between the calibration processor and the light receivers may in analogy also comprise a parallel interface or a serial interface. In case of a parallel interface every light receiver may be individually coupled to the calibration processor. In case of a serial interface a controller may be provided for the light receivers. Such a controller may be coupled to the calibration processor via a serial interface, while each one of the light emitters is individually coupled to the controller.

With this arrangement it is possible quickly evaluate all light receivers at the same time.

In another embodiment, the light emitters may each be configured to emit an unfocused beam in the direction of the light receivers, and the calibration processor may be configured to control in the calibration mode the light emitters to emit light sequentially and to evaluate the output signals of the light receivers to determine, which of the light receivers receives the emitted light.

In this embodiment, the light emitters may emit directed but unfocused light. Therefore, the light emitted by a single light emitter may be received by a plurality of light receivers. In order to detect touch events all over the screen, it is therefore necessary to cyclically activate single light emitters and evaluate the light receivers. With this arrangement, the interface to the light emitters and light receivers is simplified, since the calibration controller requires only a single interface to the light emitters. A simple multi-path switch may then be provided to contact the respective light emitters. The light receivers may also be evaluated sequentially, in this case the interface to the light receivers may also be simplified accordingly.

If, while in the calibration mode, the calibration processor detects a touch event, i.e. a light receiver that does not receive the light that is emitted by the respective light emitter, the calibration processor may assume that a mechanical misalignment of the touch-sensitive input device or an elevation of the screen may be present in the path between the light receivers that did not receive light and the respective light emitters.

In a further embodiment, the calibration processor may comprise a mapping table, e.g. stored in a memory of the calibration processor, that comprises position information about the light emitters and the light receivers with regard to the frame and therefore allows mapping the single light emitters and light receivers to a position on the frame, wherein the calibration processor may be configured to determine the control of the electric actuators based on the position of the light receivers that do not receive the emitted light.

If the calibration processor detects a light receiver that does not receive light from a corresponding light emitter, the calibration processor may assume that some form of mechanical calibration is required.

The mapping table allows the calibration processor to determine where on the frame the light receivers that do not receive the emitted light are located. Since the frame is positioned around the screen, this also allows the calibration processor to determine where on the screen the light is blocked.

In another embodiment, the touch-sensitive input device may comprise one of the electric actuators on every corner of the frame.

With an electric actuator on every corner of the frame, it is possible to move and twist the frame very flexibly. Since every one of the electric actuators may be individually controlled, every corner of the frame may be individually lowered or elevated by the calibration processor.

In a further embodiment, the calibration processor may be configured to control all electric actuators to elevate the respective corner of the frame, if groups of a limited number of light receivers which are arranged next to each other do not receive the respective emitted light, i.e. if the light receivers that do not receive the emitted light indicate a local touch event.

A limited number of light receivers that are arranged next to each other do not receive light from the respective light emitter during normal operation when a touch event is provided on the screen's surface. The limited number may e.g. refer to a single light receiver or a predefined number, like e.g. two or three or four or more light emitting receivers. It is understood, that the limited number may be defined based on the spatial resolution of the touch-sensitive input device and the area that should be accepted as a single touch event, like e.g. the area occupied by a fingertip or by a pen or stylus or the like.

Touch events may therefore be referred to as local touch events if the area (size) of the touch event is limited and a position for the touch event may be determined, like e.g. when a finger touches the screen.

If for example the surface of a screen elevates locally at a single point, e.g. due to thermal stress, the light receivers that do not receive the emitted light indicate such a local touch event during calibration. Since it is known that no local touch event by a user may happen, the calibration processor may assume that the surface of the screen is locally elevated.

In this case it suffices to elevate the frame away from the screen. This elevation will place the light emitters and the light receivers higher above the screen's surface and therefore above the elevated area or bump. Therefore, after elevating the frame, the erroneous detection of the local touch event will be prevented.

In another embodiment, if the light receivers that do not receive the emitted light indicate a distortion of the frame and/or the screen, the calibration processor may be configured to control the electric actuators to elevate the respective corner of the frame. A distortion of the screen may e.g. be present, when a single corner of the screen is elevated or lowered with respect to the other corners of the screen or when two neighboring or opposite corners are elevated or lowered with respect to the remaining corners.

In such cases the signal paths of multiple light emitters and light receivers will be blocked along a line, because the emitted light will either hit the screen's surface or leave the plane of the screen and will therefore not be received by the light receivers.

It is understood, that with a matrix like arrangement of the light emitters on two neighboring edges of the frame and a single corner being elevated, the line that blocks the light beams may be inclined with regard to the edges of the frame. This means that the emitted light of light emitters on two of the edges will be blocked.

If instead, two corners, i.e. one of the edges, of the frame are elevated, the emitted light of light emitters on the same edge will be blocked.

Therefore, if the light of neighboring light emitters on two neighboring edges is blocked, the calibration controller may simply elevate or lower the respective corner. If the light of neighboring light emitters on a single edge is blocked, the calibration controller may elevate or lower the respective edge, e.g. by controlling the electric actuators on both ends of the respective edge.

In a further embodiment, the calibration processor when controlling the electric actuators may be configured to control the respective ones of the electric actuators to maximally lower to a predetermined minimum position and in continuation to maximally elevate to a predetermined maximum position until all light receivers receive the respective emitted light or vice versa.

All light receivers receiving the respective emitted light indicate that no obstruction of the light paths is present on the screen or by distortions of the frame. Therefore, while moving the electric actuators that have to be moved, the calibration processor may e.g. continuously monitor the light receivers and stop moving the electric actuators when all light receivers receive the respective emitted light.

Further, the calibration processor may start lowering the respective corners or moving the corners down, i.e. toward the surface of the screen. If a minimum point or position is reached and the light path is still blocked, the calibration processor may move the respective corners up, i.e. away from the surface of the screen. It is understood that the configuration processor may also start the calibration by elevating the respective corners.

The minimum position will usually be defined by the frame of the touch-sensitive input device touching the surface of the screen. The maximum position may be defined as required. Usually, the larger the screen is, the higher the maximum position will be. The maximum position may e.g. range between some millimeters and 10s of centimeters, like e.g. 10 mm, 20 mm, 10 cm, 20 cm or the like.

The calibration processor may e.g. comprise a general-purpose processor that may be coupled to a memory and execute a respective program stored in the memory. The general-purpose processor may be coupled to the interfaces that couples the calibration processor with the light emitters and the light receivers to perform the required calibration functions.

It is understood, that the function of the calibration processor may also be provided in a central controller of the touch-sensitive input device, e.g. the controller that evaluates the signals from the light receivers during normal operation of the touch-sensitive input device.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a touch-sensitive input device according to the present invention;
Fig. 2 shows a block diagram of an embodiment of a touch-sensitive input device according to the present invention;
Fig. 3 shows a block diagram of an embodiment of a touch-sensitive input device according to the present invention;
Fig. 4 shows a block diagram of an embodiment of a touch-sensitive input device according to the present invention; and
Fig. 5 shows a flow diagram of an embodiment of a method according to the present invention.

In the figures like reference signs denote like elements unless stated otherwise.

### DETAILED DESCRIPTION OF THE DRAWINGS

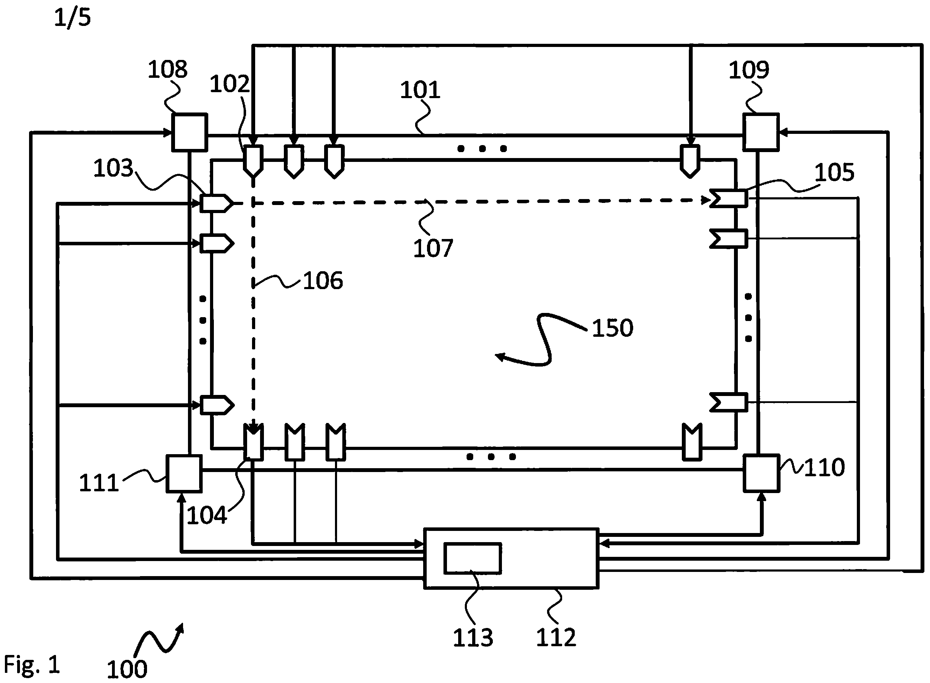

Fig. 1 shows a block diagram of a touch-sensitive input device 100. The touch-sensitive input device 100 comprises a frame 101. The frame 101 carries a number of light emitters 102, 103 arranged on the top and the left edges of the frame 101. Further, the frame 101 carries a number of light receivers 104, 105 arranged on the right and the bottom edges of the frame 101. It is understood, that for sake of clarity only one of the light emitters 102, 103 and only one of the light receivers 104, 105 is provided with a reference sign on each one of the edges. The touch-sensitive input device 100 further comprises four electric actuators 108, 109, 110, 111 arranged at the four corners of the frame 101. A calibration processor 112 is provided that is coupled to the light emitters 102, 103, the light receivers 104, 105, and the electric actuators 108, 109, 110,111.

The light emitters 102, 103 may be controlled by the calibration processor 112 to emit infrared light to a respective one of the light receivers 104, 105. The calibration processor 112 may further evaluate the output signals of the light receivers 104, 105, and control the electric actuators 108, 109, 110, 111. The electric actuators 108, 109, 110, 111 are each arranged to elevate or lower the respective edge of the frame 101. This means that by controlling the electric actuators 108, 109, 110, 111, the calibration processor 112 may deform the frame 101 or correct a distortion of the frame 101.

For calibration of the touch-sensitive input device 100, the calibration processor 112 may therefore control the light emitters 102, 103 to emit light. The light emitters 102, 103 may emit a focused directed beam to the respective light receivers 104, 105. Therefore, all light emitters 102, 103 may be activated at the same time. It is understood, that a sequential activation of the light emitters 102, 103 is also possible if the light emitters 102, 103 emitters an unfocused beam that may be received by multiple light receivers 104, 105.

The calibration processor 112 may then evaluate the output signals of the light receivers 104, 105 to determine if all light receivers 104, 105 receive the respective emitted light. If this is the case, i.e. all light receivers 104,105 receive light as expected, no further calibration is required and the calibration may be finished.

If, however, some of the light receivers 104, 105 do not receive the respective emitted light, the calibration processor 112 may perform a calibration of the touch-sensitive input device 100. It is understood, that a calibration of the touch-sensitive input device 100 in this context refers to a mechanical calibration of the touch-sensitive input device 100.

To this end, the calibration processor 112 comprises a mapping table 113 that comprises position information about the light emitters 102,103 and the light receivers 104, 105 with regard to the frame 101. This means, that the mapping table 113 may e.g. comprise for every one of the light emitters 102, 103 the information on which one of the edges the respective light emitter 102, 103 is arranged on and the number of the light emitter 102, 103 in the sequence of light emitters 102, 103. As an example, the position information may e.g. indicate that the light emitter 102 is the first light emitter on the upper edge of the frame 101 starting from the left, and that the light receiver 104 is the first light receiver on the lower edge of the frame 101 starting from the left.

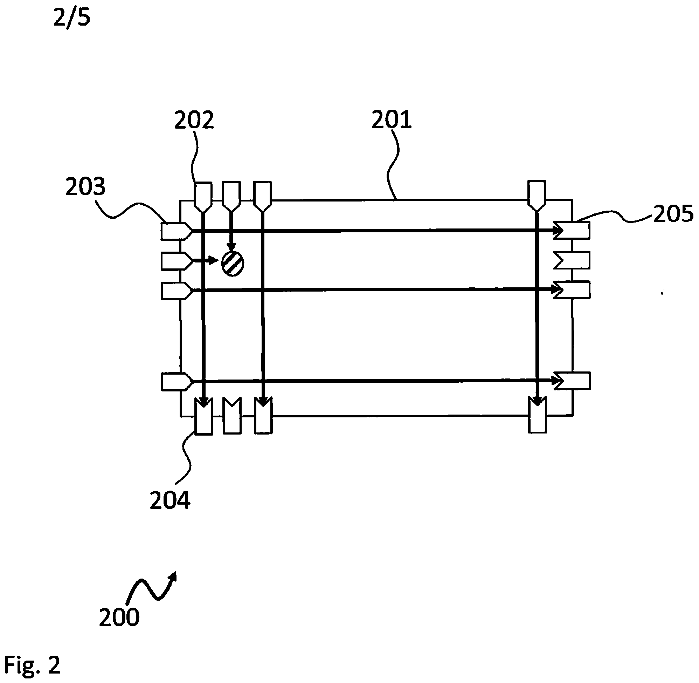

With this position information at hand, the calibration processor 112 may determine if the screen 150 is deformed and e.g. comprises an elevation, or if the frame 101 is deformed or distorted. This will be explained in more detail with regard to Figs. 2 - 4 below.

To actually perform the mechanical calibration, the calibration processor 112 will then determine the control of the electric actuators 108, 109, 110, 111 based on the positions of the light receivers 104, 105 that do not receive the emitted light.

Fig. 2 shows a block diagram of a touch-sensitive input device 200 on a screen that has an elevation 251 in the upper left corner that blocks the light of the second light emitter from the left on the upper edge and from the second light emitter from the top on the left edge. The touch-sensitive input device 200 is based on the touch-sensitive input device 100. Therefore, the touch-sensitive input device 200 also comprises a frame 201 that carries light emitters 202, 203 arranged on the top and the left edges of the frame 201, and that carries light receivers 204, 205 arranged on the right and the bottom edges of the frame 201. Again, only the first light emitters 202, 203 and light receivers 204, 205 are referenced for sake of clarity. Not shown are the electric actuators and the calibration processor.

In Fig. 2 it can be seen that the elevation 251 blocks the light of the second light emitter on the upper edge of the frame 201 and the light of the second light emitter on the left edge. Since all other light receivers 204, 205 receive the respective light, the calibration processor may determine that a local elevation is present on the screen. It is understood, that the elevation 251 may also be larger or that multiple elevations may be present. Such elevations will be detected by the calibration processor like normal touch events, i.e. locally limited obstructions of the emitted light.

To allow the touch-sensitive input device 200 to flawlessly detect touch events, the paths of the emitted light have to be elevated over the elevation 251. Therefore, the calibration processor may control all electric actuators to lift the frame 201 uniformly on all four corners until all light receivers 204, 205 receive the emitted light.

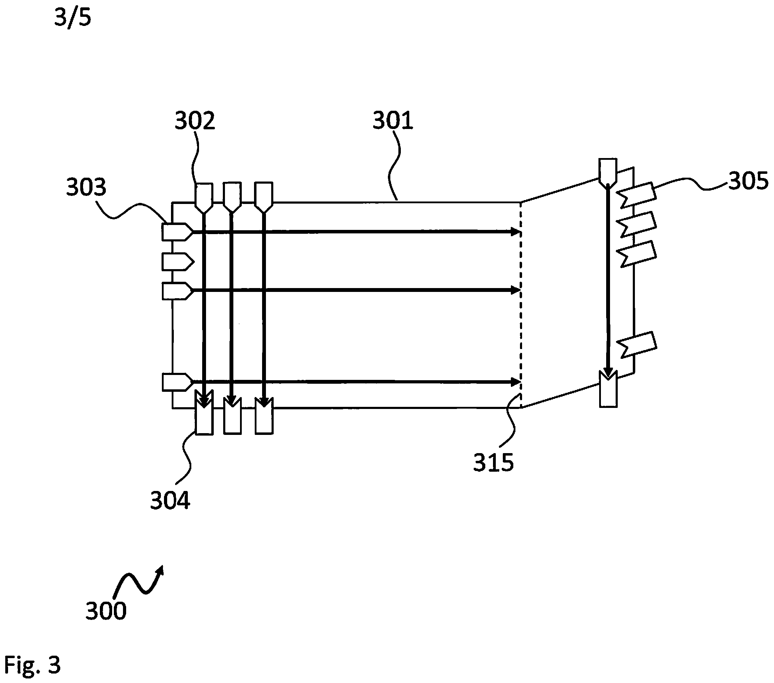

Fig. 3 shows a block diagram a touch-sensitive input device 300. The touch-sensitive input device 300 is based on the touch-sensitive input device 200. Therefore, the touch-sensitive input device 300 also comprises a frame 301 that carries light emitters 302, 303 arranged on the top and the left edges of the frame 301, and that carries light receivers 304, 305 arranged on the right and the bottom edges of the frame 301. Again, only the first light emitters 302, 303 and light receivers 304, 305 are referenced for sake of clarity. Not shown are the electric actuators and the calibration processor.

In Fig. 3 the right edge of the frame 301 is elevated when compared to the remaining frame. Therefore, the upper and lower edges will be bent upwards at bending line 315. It can be seen that the emitted light from all light emitters 303 of the left edge of the frame 301 will be blocked approximately at bending line 315.

The calibration processor will consequently detect that no one of the light receivers 305 on the right edge receives any light. The calibration processor may therefore control the electric actuators to lower the two right corners of the frame 301.

It is understood, that the right edge may also be lowered with regard to the remaining parts of the frame. In this case, the emitted light will pass over the light receivers 305 on the right edge.

Since in both cases no light is received, the calibration processor may not determine if the right edge has to move up or down. However, the calibration processor may for example start by lowering the respective corners to a minimum point and then elevating the respective corners to a maximum point until all light receivers 305 receive the emitted light. It is understood, that this scheme may be applied by the calibration processor to any other edge of the frame 301.

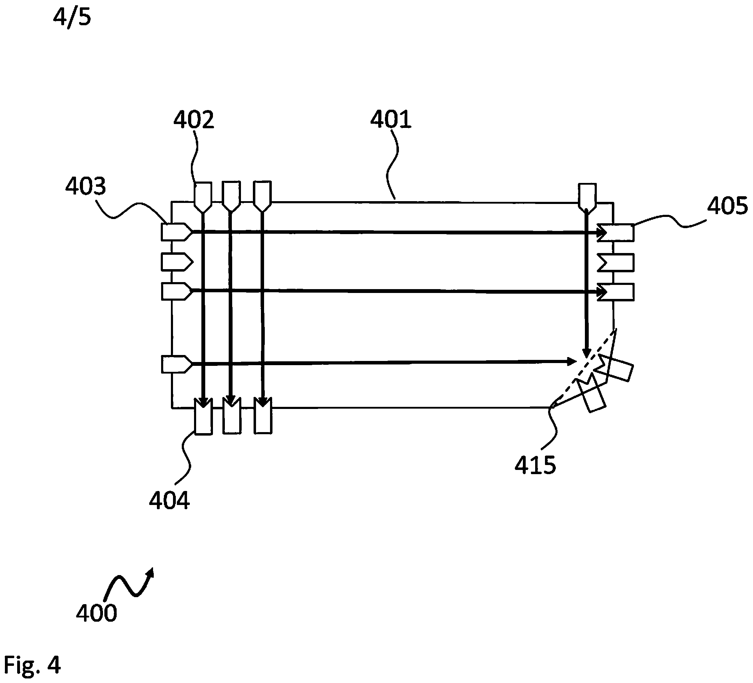

Fig. 4 shows a block diagram of a touch-sensitive input device 400. The touch-sensitive input device 400 is based on the touch-sensitive input devices 200 and 300. Therefore, the touch-sensitive input device 400 also comprises a frame 401 that carries light emitters 402, 403 arranged on the top and the left edges of the frame 401, and that carries light receivers 404, 405 arranged on the right and the bottom edges of the frame 401. Again, only the first light emitters 402, 403 and light receivers 404, 405 are referenced for sake of clarity. Not shown are the electric actuators and the calibration processor.

In Fig. 4 the lower right corner of the frame 401 is elevated when compared to the remaining frame. Therefore, the upper edge and the right edge will be bent upwards at bending line 415. It can be seen that no emitted light is received at the light receivers at the lower right corner on the right edge and the lower edge.

Therefore, if light receivers 404, 405 at a corner of the frame 401 on two edges of the frame 401 do not receive any light, it can be assumed that the respective corner is either elevated or lowered compared to the remaining frame 401.

The calibration processor may therefore control the electric actuator at the respective corner, here the lower right corner, of the frame 401 to lower the respective corner.

It is understood, that the lower right corner may also be elevated with regard to the remaining parts of the frame 401. In this case, the emitted light will pass over the affected light receivers.

Since in both cases no light is received, the calibration processor may not determine if the right edge has to move up or down. However, the calibration processor may for example start by lowering the respective corner to a minimum point and then elevating the respective corner to a maximum point until all light receivers 405 receive the emitted light. It is understood, that this scheme may be applied by the calibration processor to any other corner of the frame 401.

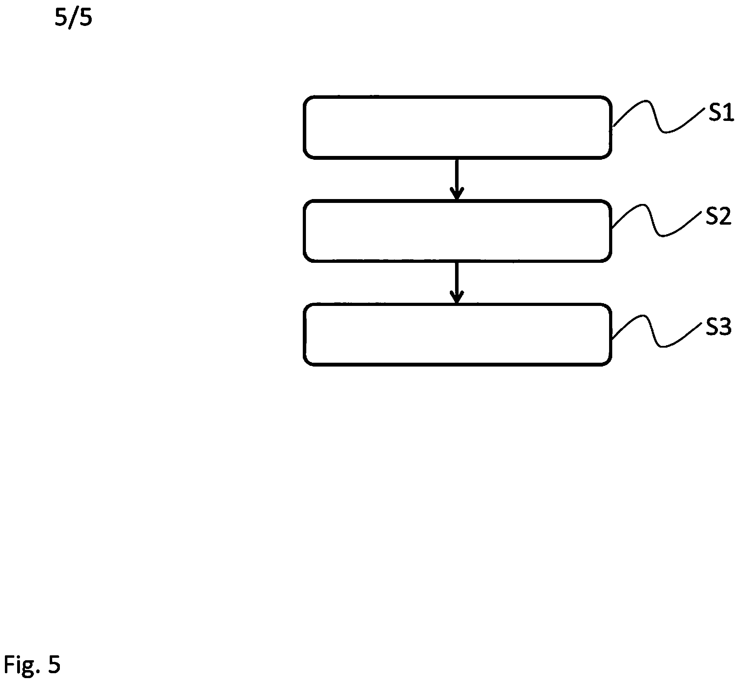

For sake of clarity in the following description of the method-based Fig. 5 the reference signs used above in the description of apparatus-based Figs. 1 - 4 will be maintained.

Fig. 5 shows a flow diagram of a method according to the present invention for calibrating a touch-sensitive input device 100, 200, 300, 400.

The method comprises controlling S1 light emitters 102, 103, 202, 203, 302, 303, 402, 404 of the touch-sensitive input device 100, 200, 300, 400 to emit light, determining S2 which of a number of light receivers 104, 105, 204, 205, 304, 305, 404, 405 of the touch-sensitive input device 100, 200, 300, 400 receive the emitted light, and controlling S3 electric actuators 108, 109, 110, 111 of the touch-sensitive input device 100, 200, 300, 400 to elevate or lower the respective ones of the corners of a frame 101, 201, 301, 401 of the touch-sensitive input device 100, 200, 300, 400 based on which of the light receivers 104, 105, 204, 205, 304, 305, 404, 405 receive the emitted light.

In an embodiment, the light emitters 102, 103, 202, 203, 302, 303, 402, 404 may each emit a focused and directed beam to a respective one of the light receivers 104, 105, 204, 205, 304, 305, 404, 405 and the light emitters 102, 103, 202, 203, 302, 303, 402, 404 may be controlled to emit light concurrently. Further, determining may comprise evaluating the output signals of all light receivers 104, 105, 204, 205, 304, 305, 404, 405 concurrently.

In an alternative embodiment, the light emitters 102, 103, 202, 203, 302, 303, 402, 404 may each emit an unfocused beam in the direction of the light receivers 104,105, 204, 205, 304, 305, 404, 405 and the light emitters 102,103, 202, 203,302, 303, 402, 404 may be controlled to emit light sequentially. In addition, determining may comprise evaluating the output signals of the light receivers 104, 105, 204, 205, 304, 305, 404, 405.

The method may in an embodiment comprise determining the positions of the light receivers 104, 105, 204, 205, 304, 305, 404, 405 based on a mapping table 113 that comprises position information about the light emitters 102, 103, 202, 203, 302, 303, 402, 404 and the light receivers 104, 105, 204, 205, 304, 305, 404, 405 with regard to the frame 101, 201, 301, 401 of the touch-sensitive input device 100, 200, 300, 400. In addition, the method may comprise determining the control of the electric actuators 108, 109, 110, 111 based on the positions of the light receivers 104, 105, 204, 205, 304, 305, 404, 405 that do not receive the emitted light.

In an embodiment, all electric actuators 108, 109, 110, 111 may be controlled to elevate the respective corners of the frame 101, 201, 301, 401, if a limited number of light receivers 104, 105, 204, 205, 304, 305, 404, 405 which are arranged next to each other do not receive the respective emitted light.

Further, if the light receivers 104, 105, 204, 205, 304, 305, 404, 405 that do not receive the emitted light indicate a distortion of the frame 101, 201, 301, 401 and/or the screen, the electric actuators 108, 109, 110, 111 may be controlled to elevate the respective corners of the frame 101, 201, 301, 401.

Further, controlling the electric actuators 108, 109, 110, 111 may comprise controlling the respective ones of the electric actuators 108, 109, 110, 111 to maximally lower to a predetermined minimum position and in continuation to maximally elevate to a predetermined maximum position until all light receivers 104, 105, 204, 205, 304, 305, 404, 405 receive the respective emitted light or vice versa.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a touch-sensitive input device 100, 200, 300, 400 for a screen, the touch-sensitive input device 100, 200, 300, 400 comprising a frame 101, 201, 301, 401, a number, i.e. one or more, of light emitters 102, 103, 202, 203, 302, 303, 402, 404 arranged on one or two first edges of the frame 101, 201, 301, 401, a number, i.e. one or more, of light receivers 104, 105, 204, 205, 304, 305, 404, 405 arranged on one or two second edges of the frame 101, 201, 301, 401, wherein the one or two second edges are edges opposite to the respective one or two first edges, a number, i.e. one or more, of electric actuators 108, 109, 110, 111 arranged at least at one corner of the frame 101, 201, 301, 401 and configured to controllably elevate or lower the respective corner of the frame 101, 201, 301, 401, and a calibration processor 112 configured to control in a calibration mode the light emitters 102, 103, 202, 203, 302, 303, 402, 404 to emit light and to determine which of the light receivers 104, 105, 204, 205, 304, 305, 404, 405 receive the emitted light, and to control the electric actuators 108, 109, 110, 111 to elevate or lower the respective ones of the corners of the frame 101, 201, 301, 401 based on which of the light receivers 104, 105, 204, 205, 304, 305, 404, 405 receive the emitted light. Further, the present invention provides a screen and a respective method.

### List of reference signs

- 100, 200, 300, 400: touch-sensitive input
- 101, 201, 301, 401: frame
- 102, 103, 202, 203, 302, 303, 402, 404: light emitter
- 104, 105, 204, 205, 304, 305, 404, 405: light receiver
- 106,107: ray
- 108, 109, 110, 111: electric actuator
- 112: calibration processor
- 113: mapping table
- 315, 415: bending line
- 150: screen surface
- 251: elevation
- S1, S2, S3: method steps

## Claims

1. Touch-sensitive input device (100, 200, 300, 400) for a screen, the touch-sensitive input device (100, 200, 300, 400) comprising:
a frame (101, 201, 301, 401),
a number of light emitters (102, 103, 202, 203, 302, 303, 402, 404) arranged on one or two first edges of the frame (101, 201, 301, 401),
a number of light receivers (104, 105, 204, 205, 304, 305, 404, 405) arranged on one or two second edges of the frame (101, 201, 301, 401), wherein the one or two second edges are edges opposite to the respective one or two first edges,
**characterized by**
a number of electric actuators (108, 109, 110, 111) arranged at least at one corner of the frame (101, 201, 301, 401) and configured to controllably elevate or lower the respective corner of the frame (101, 201, 301, 401), and
a calibration processor (112) configured to control in a calibration mode the light emitters (102, 103, 202, 203, 302, 303, 402, 404) to emit light and to determine which of the light receivers (104, 105, 204, 205, 304, 305, 404, 405) receive the emitted light, and to control the electric actuators (108, 109, 110, 111) to elevate or lower the respective ones of the corners of the frame (101, 201, 301, 401) based on which of the light receivers (104, 105, 204, 205, 304, 305, 404, 405) receives the emitted light.

2. Touch-sensitive input device (100, 200, 300, 400) according to claim 1, wherein the light emitters (102, 103, 202, 203, 302, 303, 402, 404) are each configured to emit a focused and directed beam to a respective one of the light receivers (104, 105, 204, 205, 304, 305, 404, 405), and wherein the calibration processor (112) is configured to control in the calibration mode all light emitters (102, 103, 202, 203, 302, 303, 402, 404) to emit light concurrently and to evaluate the output signals of all light receivers (104, 105, 204, 205, 304, 305, 404, 405) concurrently to determine, which of the light receivers (104, 105, 204, 205, 304, 305, 404, 405) receives the emitted light.

3. Touch-sensitive input device (100, 200, 300, 400) according to claim 1, wherein the light emitters (102, 103, 202, 203, 302, 303, 402, 404) are each configured to emit an unfocused beam in the direction of the light receivers (104, 105, 204, 205, 304, 305, 404, 405), and wherein the calibration processor (112) is configured to control in the calibration mode the light emitters (102, 103, 202, 203, 302, 303, 402, 404) to emit light sequentially and to evaluate the output signals of the light receivers (104, 105, 204, 205, 304, 305, 404, 405) to determine, which of the light receivers (104, 105, 204, 205, 304, 305, 404, 405) receives the emitted light.

4. Touch-sensitive input device (100, 200, 300, 400) according to any one of the preceding claims, wherein the calibration processor (112) comprises a mapping table (113) that comprises position information about the light emitters (102, 103, 202, 203, 302, 303, 402, 404) and the light receivers (104, 105, 204, 205, 304, 305, 404, 405) with regard to the frame (101, 201, 301, 401), wherein the calibration processor (112) is configured to determine the control of the electric actuators (108, 109, 110, 111) based on the position of the light receivers (104, 105, 204, 205, 304, 305, 404, 405) that do not receive the emitted light.

5. Touch-sensitive input device (100, 200, 300, 400) according to any one of the preceding claims, comprising one of the electric actuators (108, 109, 110, 111) on every corner of the frame (101, 201, 301, 401).

6. Touch-sensitive input device (100, 200, 300, 400) according to claim 5, wherein the calibration processor (112) is configured to control all electric actuators (108, 109, 110, 111) to elevate the respective corner of the frame (101, 201, 301, 401), if a limited number of light receivers (104, 105, 204, 205, 304, 305, 404, 405) which are arranged next to each other do not receive the respective emitted light.

7. Touch-sensitive input device (100, 200, 300, 400) according to any one of claims 5 and 6, wherein if the light receivers (104, 105, 204, 205, 304, 305, 404, 405) that do not receive the emitted light indicate a distortion of the frame (101, 201, 301, 401) and/or the screen, the calibration processor (112) is configured to control the electric actuators (108, 109, 110, 111) to elevate the respective corner of the frame (101, 201, 301, 401).

8. Touch-sensitive input device (100, 200, 300, 400) according to any one of the preceding claims, wherein the calibration processor (112) when controlling the electric actuators (108, 109, 110, 111) is configured to control the respective ones of the electric actuators (108, 109, 110, 111) to maximally lower to a predetermined minimum position and in continuation to maximally elevate to a predetermined maximum position until all light receivers (104, 105, 204, 205, 304, 305, 404, 405) receive the respective emitted light or vice versa.

9. Screen comprising:
a screen surface (150) configured to display image content, and
**characterized by**
a touch-sensitive input device (100, 200, 300, 400) according to any one of the preceding claims, wherein the frame (101, 201, 301, 401) of the touch-sensitive input device (100, 200, 300, 400) is arranged around the screen surface (150).

10. Method for calibrating a touch-sensitive input device (100, 200, 300, 400) according to any one of the preceding claims 1 to 8, the method comprising:
controlling (S1) light emitters (102, 103, 202, 203, 302, 303, 402, 404) of the touch-sensitive input device (100, 200, 300, 400) to emit light,
**characterized by**
determining (S2) which of a number of light receivers (104, 105, 204, 205, 304, 305, 404, 405) of the touch-sensitive input device (100, 200, 300, 400) receives the emitted light, and
controlling (S3) electric actuators (108, 109, 110, 111) of the touch-sensitive input device (100, 200, 300, 400) to elevate or lower the respective ones of the corners of a frame (101, 201, 301, 401) of the touch-sensitive input device (100, 200, 300, 400) based on which of the light receivers (104, 105, 204, 205, 304, 305, 404, 405) receive the emitted light.

11. Method according to claim 10, wherein the light emitters (102, 103, 202, 203, 302, 303, 402, 404) each emit a focused and directed beam to a respective one of the light receivers (104, 105, 204, 205, 304, 305, 404, 405) and the light emitters (102, 103, 202, 203, 302, 303, 402, 404) are controlled to emit light concurrently, and wherein determining comprises evaluating the output signals of all light receivers (104, 105, 204, 205, 304, 305, 404, 405) concurrently, or
wherein the light emitters (102, 103, 202, 203, 302, 303, 402, 404) each emit an unfocused beam in the direction of the light receivers (104, 105, 204, 205, 304, 305, 404, 405) and the light emitters (102, 103, 202, 203, 302, 303, 402, 404) are controlled to emit light sequentially, and determining comprises evaluating the output signals of the light receivers (104, 105, 204, 205, 304, 305, 404, 405).

12. Method according to any one of the preceding claims 10 and 11, comprising determining the positions of the light receivers (104, 105, 204, 205, 304, 305, 404, 405) based on a mapping table (113) that comprises position information about the light emitters (102, 103, 202, 203, 302, 303, 402, 404) and the light receivers (104, 105, 204, 205, 304, 305, 404, 405) with regard to the frame (101, 201, 301, 401) of the touch-sensitive input device (100, 200, 300, 400) and comprising determining the control of the electric actuators (108, 109, 110, 111) based on the positions of the light receivers (104, 105, 204, 205, 304, 305, 404, 405) that do not receive the emitted light.

13. Method according to claim 12, wherein all electric actuators (108, 109, 110, 111) are controlled to elevate the respective corners of the frame (101, 201, 301, 401), if a limited number of light receivers (104, 105, 204, 205, 304, 305, 404, 405) which are arranged next to each other do not receive the respective emitted light.

14. Method according to any one of claims 12 and 13, wherein if the light receivers (104, 105, 204, 205, 304, 305, 404, 405) that do not receive the emitted light indicate a distortion of the frame (101, 201, 301, 401) and/or the screen, the electric actuators (108, 109, 110, 111) (108, 109, 110, 111) are controlled to elevate the respective corners of the frame (101, 201, 301, 401).

15. Method according to any one of the preceding claims 10 to 14, wherein controlling the electric actuators (108, 109, 110, 111) comprises controlling the respective ones of the electric actuators (108, 109, 110, 111) to maximally lower to a predetermined minimum position and in continuation to maximally elevate to a predetermined maximum position until all light receivers (104, 105, 204, 205, 304, 305, 404, 405) receive the respective emitted light or vice versa.

## Patentansprüche

1. Berührungsempfindliche Eingabevorrichtung (100, 200, 300, 400) für einen Bildschirm, wobei die berührungsempfindliche Eingabevorrichtung (100, 200, 300, 400) Folgendes aufweist:
einen Rahmen (101, 201, 301, 401),
eine Anzahl von Lichtemittern (102, 103, 202, 203, 302, 303, 402, 404), die an einer oder zwei ersten Kanten des Rahmens (101, 201, 301, 401) angeordnet sind,
eine Anzahl von Lichtempfängern (104, 105, 204, 205, 304, 305, 404, 405), die an einem oder zwei zweiten Rändern des Rahmens (101, 201, 301, 401) angeordnet sind, wobei der eine oder die zwei zweiten Ränder Ränder sind, die den jeweiligen ein oder zwei ersten Rändern gegenüberliegen,
**gekennzeichnet durch**
eine Anzahl von elektrischen Aktuatoren (108, 109, 110, 111), die an mindestens einer Ecke des Rahmens (101, 201, 301, 401) angeordnet und so konfiguriert sind, dass sie die betreffende Ecke des Rahmens (101, 201, 301, 401) steuerbar anheben oder absenken, und
einen Kalibrierungsprozessor (112), der so konfiguriert ist, dass er in einem Kalibrierungsmodus die Lichtemitter (102, 103, 202, 203, 302, 303, 402, 404) so steuert, dass sie Licht emittieren, und dass er bestimmt, welche der Lichtempfänger (104, 105, 204, 205, 304, 305, 404, 405) das emittierte Licht empfangen, und die elektrischen Aktuatoren (108, 109, 110, 111) zu steuern, um die jeweiligen Ecken des Rahmens (101, 201, 301, 401) anzuheben oder abzusenken, je nachdem, welcher der Lichtempfänger (104, 105, 204, 205, 304, 305, 404, 405) das ausgesendete Licht empfängt.

2. Berührungsempfindliche Eingabevorrichtung (100, 200, 300, 400) gemäß Anspruch 1, wobei die Lichtemitter (102, 103, 202, 203, 302, 303, 402, 404) jeweils so konfiguriert sind, dass sie einen fokussierten und gerichteten Strahl zu einem jeweiligen der Lichtempfänger (104, 105, 204, 205, 304, 305, 404, 405) aussenden, und wobei der Kalibrierungsprozessor (112) so konfiguriert ist, dass er im Kalibrierungsmodus alle Lichtemitter (102, 103, 202, 203, 302, 303, 402, 404) so steuert, dass sie gleichzeitig Licht emittieren, und die Ausgangssignale aller Lichtempfänger (104, 105, 204, 205, 304, 305, 404, 405) gleichzeitig auszuwerten, um zu bestimmen, welcher der Lichtempfänger (104, 105, 204, 205, 304, 305, 404, 405) das emittierte Licht empfängt.

3. Berührungsempfindliche Eingabevorrichtung (100, 200, 300, 400) gemäß Anspruch 1, wobei die Lichtemitter (102, 103, 202, 203, 302, 303, 402, 404) jeweils so konfiguriert sind, dass sie einen unfokussierten Strahl in die Richtung der Lichtempfänger (104, 105, 204, 205, 304, 305, 404, 405) emittieren, und wobei der Kalibrierungsprozessor (112) so konfiguriert ist, dass er im Kalibrierungsmodus die Lichtemitter (102, 103, 202, 203, 302, 303, 402, 404) so steuert, dass sie nacheinander Licht emittieren und die Ausgangssignale der Lichtempfänger (104, 105, 204, 205, 304, 305, 404, 405) auszuwerten, um zu bestimmen, welcher der Lichtempfänger (104, 105, 204, 205, 304, 305, 404, 405) das emittierte Licht empfängt.

4. Berührungsempfindliche Eingabevorrichtung (100, 200, 300, 400) gemäß einem der vorhergehenden Ansprüche, wobei der Kalibrierungsprozessor (112) eine Zuordnungstabelle (113) aufweist, die Positionsinformationen über die Lichttemitter (102, 103, 202, 203, 302, 303, 402, 404) und die Lichtempfänger (104, 105, 204, 205, 304, 305, 404, 405) in Bezug auf den Rahmen (101, 201, 301, 401) umfasst, wobei der Kalibrierungsprozessor (112) so konfiguriert ist, dass er die Steuerung der elektrischen Aktuatoren (108, 109, 110, 111) basierend auf der Position der Lichtempfänger (104, 105, 204, 205, 304, 305, 404, 405) bestimmt, die das emittierte Licht nicht empfangen.

5. Berührungsempfindliche Eingabevorrichtung (100, 200, 300, 400) gemäß einem der vorhergehenden Ansprüche, die einen der elektrischen Aktuatoren (108, 109, 110, 111) an jeder Ecke des Rahmens (101, 201, 301, 401) aufweist.

6. Berührungsempfindliche Eingabevorrichtung (100, 200, 300, 400) gemäß Anspruch 5, wobei der Kalibrierungsprozessor (112) so konfiguriert ist, dass er alle elektrischen Aktuatoren (108, 109, 110, 111) steuert, um die jeweilige Ecke des Rahmens (101, 201, 301, 401) anzuheben, wenn eine begrenzte Anzahl von nebeneinander angeordneten Lichtempfängern (104, 105, 204, 205, 304, 305, 404, 405) das jeweilige emittierte Licht nicht empfangen.

7. Berührungsempfindliche Eingabevorrichtung (100, 200, 300, 400) gemäß einem der Ansprüche 5 und 6, wobei der Kalibrierungsprozessor (112) so konfiguriert ist, dass er die elektrischen Aktuatoren (108, 109, 110, 111) steuert, um die jeweilige Ecke des Rahmens (101, 201, 301, 401) anzuheben, wenn die Lichtempfänger (104,105, 204, 205, 304, 305, 404, 405), die das emittierte Licht nicht empfangen, eine Verzerrung des Rahmens (101, 201, 301, 401) und/oder des Bildschirms anzeigen.

8. Berührungsempfindliche Eingabevorrichtung (100, 200, 300, 400) gemäß einem der vorhergehenden Ansprüche, wobei der Kalibrierungsprozessor (112) bei der Steuerung der elektrischen Aktuatoren (108, 109, 110, 111) so konfiguriert ist, dass er die jeweiligen elektrischen Aktuatoren (108, 109, 110, 111) so steuert, dass sie sich maximal auf eine vorbestimmte Minimalposition absenken und anschließend maximal auf eine vorbestimmte Maximalposition anheben, bis alle Lichtempfänger (104, 105, 204, 205, 304, 305, 404, 405) das jeweilige emittierte Licht empfangen oder umgekehrt.

9. Bildschirm aufweisend:
eine Bildschirmoberfläche (150), die zum Anzeigen von Bildinhalten konfiguriert ist, und
**gekennzeichnet durch**
eine berührungsempfindliche Eingabevorrichtung (100, 200, 300, 400) gemäß einem der vorhergehenden Ansprüche, wobei der Rahmen (101, 201, 301, 401) der berührungsempfindlichen Eingabevorrichtung (100, 200, 300, 400) um die Bildschirmoberfläche (150) angeordnet ist.

10. Verfahren zum Kalibrieren einer berührungsempfindlichen Eingabevorrichtung (100, 200, 300, 400) nach einem der vorhergehenden Ansprüche 1 bis 8, wobei das Verfahren aufweist:
Steuern (S1) von Lichtemittern (102, 103, 202, 203, 302, 303, 402, 404) der berührungsempfindlichen Eingabevorrichtung (100, 200, 300, 400) zum Aussenden von Licht,
**gekennzeichnet durch**
Bestimmen (S2), welche einer Anzahl von Lichtempfängern (104, 105, 204, 205, 304, 305, 404, 405) der berührungsempfindlichen Eingabevorrichtung (100, 200, 300, 400) das emittierte Licht empfangen, und
Steuern (S3) elektrischer Aktuatoren (108, 109, 110, 111) der berührungsempfindlichen Eingabevorrichtung (100, 200, 300, 400), um die jeweiligen Ecken eines Rahmens (101, 201, 301, 401) der berührungsempfindlichen Eingabevorrichtung (100, 200, 300, 400) anzuheben oder abzusenken, basierend darauf, welche der Lichtempfänger (104, 105, 204, 205, 304, 305, 404, 405) das ausgesendete Licht empfangen.

11. Verfahren gemäß Anspruch 10, bei dem die Lichtemitter (102, 103, 202, 203, 302, 303, 402, 404) jeweils einen fokussierten und gerichteten Strahl zu einem jeweiligen der Lichtempfänger (104, 105, 204, 205, 304, 305, 404, 405) senden und die Lichtemitter (102, 103, 202, 203, 302, 303, 402, 404) so gesteuert werden, dass sie gleichzeitig Licht emittieren, und wobei das Bestimmen das gleichzeitige Auswerten der Ausgangssignale aller Lichtempfänger (104, 105, 204, 205, 304, 305, 404, 405) aufweist, oder
wobei die Lichtemitter (102, 103, 202, 203, 302, 303, 402, 404) jeweils einen unfokussierten Strahl in Richtung der Lichtempfänger (104, 105, 204, 205, 304, 305, 404, 405) emittieren und die Lichtemitter (102, 103, 202, 203, 302, 303, 402, 404) so gesteuert werden, dass sie nacheinander Licht emittieren, und das Bestimmen das Auswerten der Ausgangssignale der Lichtempfänger (104, 105, 204, 205, 304, 305, 404, 405) aufweist.

12. Verfahren gemäß einem der vorangehenden Ansprüche 10 und 11, das das Bestimmen der Positionen der Lichtempfänger (104, 105, 204, 205, 304, 305, 404, 405) gemäß einer Zuordnungstabelle (113) aufweist, die Positionsinformationen über die Lichtemitter (102, 103, 202, 203, 302, 303, 402, 404) und die Lichtempfänger (104, 105, 204, 205, 304, 305, 404, 405) in Bezug auf den Rahmen (101, 201, 301, 401) der berührungsempfindlichen Eingabevorrichtung (100, 200, 300, 400) aufweist, und das das Bestimmen der Steuerung der elektrischen Aktuatoren (108, 109, 110, 111) auf der Grundlage der Positionen der Lichtempfänger (104, 105, 204, 205, 304, 305, 404, 405), die das emittierte Licht nicht empfangen, aufweist.

13. Verfahren gemäß Anspruch 12, wobei alle elektrischen Aktuatoren (108, 109, 110, 111) so gesteuert werden, dass sie die jeweiligen Ecken des Rahmens (101, 201, 301, 401) anheben, wenn eine begrenzte Anzahl von Lichtempfängern (104, 105, 204, 205, 304, 305, 404, 405), die nebeneinander angeordnet sind, das jeweilige emittierte Licht nicht empfangen.

14. Verfahren gemäß einem der Ansprüche 12 und 13, wobei, wenn die Lichtempfänger (104, 105, 204, 205, 304, 305, 404, 405), die das emittierte Licht nicht empfangen, eine Verzerrung des Rahmens (101, 201, 301, 401) und/oder des Bildschirms anzeigen, die elektrischen Aktuatoren (108, 109, 110, 111) gesteuert werden, um die jeweiligen Ecken des Rahmens (101, 201, 301, 401) anzuheben.

15. Verfahren gemäß einem der vorangehenden Ansprüche 10 bis 14, wobei die Steuerung der elektrischen Aktuatoren (108, 109, 110, 111) aufweist, dass die jeweiligen elektrischen Aktuatoren (108, 109, 110, 111) so gesteuert werden, dass sie sich maximal auf eine vorbestimmte Minimalposition absenken und anschließend maximal auf eine vorbestimmte Maximalposition anheben, bis alle Lichtempfänger (104, 105, 204, 205, 304, 305, 404, 405) das jeweilige emittierte Licht wieder empfangen oder umgekehrt.

## Revendications

1. Dispositif d'entrée tactile (100, 200, 300, 400) pour un écran, le dispositif d'entrée tactile (100, 200, 300, 400) comprenant :
un cadre (101, 201, 301, 401),
un certain nombre d'émetteurs de lumière (102, 103, 202, 203, 302, 303, 402, 404) disposés sur un ou deux premiers bords du cadre (101, 201, 301, 401),
un certain nombre de récepteurs de lumière (104, 105, 204, 205, 304, 305, 404, 405) disposés sur un ou deux seconds bords du cadre (101, 201, 301, 401), dans lequel le ou les deux seconds bords sont des bords opposés au ou aux deux premiers bords respectifs,
**caractérisé par**
un certain nombre d'actionneurs électriques (108, 109, 110, 111) disposés au moins à un coin du cadre (101, 201, 301, 401) et configurés pour élever ou abaisser de manière contrôlable le coin respectif du cadre (101, 201, 301, 401), et
un processeur de calibration (112) configuré pour commander dans un mode de calibration les émetteurs de lumière (102, 103, 202, 203, 302, 303, 402, 404) pour émettre de la lumière et pour déterminer lequel des récepteurs de lumière (104, 105, 204, 205, 304, 305, 404, 405) reçoit la lumière émise, et pour commander les actionneurs électriques (108, 109, 110, 111) afin d'élever ou d'abaisser les coins respectifs du cadre (101, 201, 301, 401) en fonction du récepteur de lumière (104, 105, 204, 205, 304, 305, 404, 405) qui reçoit la lumière émise.

2. Dispositif d'entrée tactile (100, 200, 300, 400) selon la revendication 1, dans lequel les émetteurs de lumière (102, 103, 202, 203, 302, 303, 402, 404) sont chacun configurés pour émettre un faisceau focalisé et dirigé vers l'un respectif des récepteurs de lumière (104, 105, 204, 205, 304, 305, 404, 405), et dans lequel le processeur de calibration (112) est configuré pour commander en mode calibration tous les émetteurs de lumière (102, 103, 202, 203, 302, 303, 402, 404) pour émettre de la lumière simultanément et pour évaluer les signaux de sortie de tous les récepteurs de lumière (104, 105, 204, 205, 304, 305, 404, 405) simultanément pour déterminer lequel des récepteurs de lumière (104, 105, 204, 205, 304, 305, 404, 405) reçoit la lumière émise.

3. Dispositif d'entrée tactile (100, 200, 300, 400) selon la revendication 1, dans lequel les émetteurs de lumière (102, 103, 202, 203, 302, 303, 402, 404) sont chacun configurés pour émettre un faisceau non focalisé dans la direction des récepteurs de lumière (104, 105, 204, 205, 304, 305, 404, 405), et dans lequel le processeur de calibration (112) est configuré pour commander dans le mode de calibration les émetteurs de lumière (102, 103, 202, 203, 302, 303, 402, 404) pour émettre de la lumière séquentiellement et pour évaluer les signaux de sortie des récepteurs de lumière (104, 105, 204, 205, 304, 305, 404, 405) pour déterminer lequel des récepteurs de lumière (104, 105, 204, 205, 304, 305, 404, 405) reçoit la lumière émise.

4. Dispositif d'entrée tactile (100, 200, 300, 400) selon l'une quelconque des revendications précédentes, dans lequel le processeur de calibration (112) comprend une table de correspondance (113) qui comprend des informations de position concernant les émetteurs de lumière (102, 103, 202, 203, 302, 303, 402, 404) et les récepteurs de lumière (104, 105, 204, 205, 304, 305, 404, 405) par rapport au cadre (101, 201, 301, 401), dans lequel le processeur de calibration (112) est configuré pour déterminer la commande des actionneurs électriques (108, 109, 110, 111) sur la base de la position des récepteurs de lumière (104, 105, 204, 205, 304, 305, 404, 405) qui ne reçoivent pas la lumière émise.

5. Dispositif d'entrée tactile (100, 200, 300, 400) selon l'une quelconque des revendications précédentes, comprenant un des actionneurs électriques (108, 109, 110, 111) sur chaque coin du cadre (101, 201, 301, 401).

6. Dispositif d'entrée tactile (100, 200, 300, 400) selon la revendication 5, dans lequel le processeur de calibration (112) est configuré pour commander tous les actionneurs électriques (108, 109, 110, 111) pour élever le coin respectif du cadre (101, 201, 301, 401), si un nombre limité de récepteurs de lumière (104, 105, 204, 205, 304, 305, 404, 405) qui sont disposés les uns à côté des autres ne reçoivent pas la lumière émise respective.

7. Dispositif d'entrée tactile (100, 200, 300, 400) selon l'une quelconque des revendications 5 et 6, dans lequel si les récepteurs de lumière (104, 105, 204, 205, 304, 305, 404, 405) qui ne reçoivent pas la lumière émise indiquent une déformation du cadre (101, 201, 301, 401) et/ou de l'écran, le processeur de calibration (112) est configuré pour commander les actionneurs électriques (108, 109, 110, 111) pour élever le coin respectif du cadre (101, 201, 301, 401).

8. Dispositif d'entrée tactile (100, 200, 300, 400) selon l'une quelconque des revendications précédentes, dans lequel le processeur de calibration (112), lorsqu'il commande les actionneurs électriques (108, 109, 110, 111), est configuré pour commander les actionneurs électriques respectifs (108, 109, 110, 111) pour les abaisser au maximum jusqu'à une position minimale prédéterminée et, ensuite, les élever au maximum jusqu'à une position maximale prédéterminée jusqu'à ce que tous les récepteurs de lumière (104, 105, 204, 205, 304, 305, 404, 405) reçoivent la lumière émise respective ou vice versa.

9. Écran comprenant :
une surface d'écran (150) configurée pour afficher un contenu d'image, et
**caractérisé par**
un dispositif d'entrée tactile (100, 200, 300, 400) selon l'une quelconque des revendications précédentes, dans lequel le cadre (101, 201, 301, 401) du dispositif d'entrée tactile (100, 200, 300, 400) est disposé autour de la surface d'écran (150).

10. Méthode de calibration d'un dispositif d'entrée tactile (100, 200, 300, 400) selon l'une quelconque des revendications précédentes 1 à 8, la méthode comprenant :
commander (S1) des émetteurs de lumière (102, 103, 202, 203, 302, 303, 402, 404) du dispositif d'entrée tactile (100, 200, 300, 400) pour émettre de la lumière,
**caractérisé par**
la détermination (S2) de celui d'un certain nombre de récepteurs de lumière (104, 105, 204, 205, 304, 305, 404, 405) du dispositif d'entrée tactile (100, 200, 300, 400) qui reçoit la lumière émise, et
commander (S3) des actionneurs électriques (108, 109, 110, 111) du dispositif d'entrée tactile (100, 200, 300, 400) pour élever ou abaisser les coins respectifs d'un cadre (101, 201, 301, 401) du dispositif d'entrée tactile (100, 200, 300, 400) sur la base de ceux des récepteurs de lumière (104, 105, 204, 205, 304, 305, 404, 405) qui reçoivent la lumière émise.

11. Méthode selon la revendication 10, dans laquelle les émetteurs de lumière (102, 103, 202, 203, 302, 303, 402, 404) émettent chacun un faisceau focalisé et dirigé vers l'un respectif des récepteurs de lumière (104, 105, 204, 205, 304, 305, 404, 405) et des émetteurs de lumière (102, 103, 202, 203, 302, 303, 402, 404) sont commandés pour émettre de la lumière simultanément, et dans lequel le détermination comprend l'évaluation des signaux de sortie de tous les récepteurs de lumière (104, 105, 204, 205, 304, 305, 404, 405) simultanément, ou
dans lequel les émetteurs de lumière (102, 103, 202, 203, 302, 303, 402, 404) émettent chacun un faisceau non fusionné dans la direction des récepteurs de lumière (104, 105, 204, 205, 304, 305, 404, 405) et les émetteurs de lumière (102, 103, 202, 203, 302, 303, 402, 404) sont commandés pour émettre de la lumière séquentiellement, et la détermination comprend l'évaluation des signaux de sortie des récepteurs de lumière (104, 105, 204, 205, 304, 305, 404, 405).

12. Méthode selon l'une quelconque des revendications précédentes 10 et 11, comprenant la détermination des positions des récepteurs de lumière (104, 105, 204, 205, 304, 305, 404, 405) sur la base d'une table de correspondance (113) qui comprend des informations de position concernant les émetteurs de lumière (102, 103, 202, 203, 302, 303, 402, 404) et les récepteurs de lumière (104, 105, 204, 205, 304, 305, 404, 405) par rapport au cadre (101, 201, 301, 401) du dispositif d'entrée tactile (100, 200, 300, 400) et comprenant la détermination de la commande des actionneurs électriques (108, 109, 110, 111) sur la base des positions des récepteurs de lumière (104, 105, 204, 205, 304, 305, 404, 405) qui ne reçoivent pas la lumière émise.

13. Méthode selon la revendication 12, dans laquelle tous les actionneurs électriques (108, 109, 110, 111) sont commandés pour élever les coins respectifs du cadre (101, 201, 301, 401), si un nombre limité de récepteurs de lumière (104, 105, 204, 205, 304, 305, 404, 405) qui sont disposés les uns à côté des autres ne reçoivent pas la lumière émise respective.

14. Méthode selon l'une quelconque des revendications 12 et 13, dans laquelle si les récepteurs de lumière (104, 105, 204, 205, 304, 305, 404, 405) qui ne reçoivent pas la lumière émise indiquent une déformation du cadre (101, 201, 301, 401) et/ou de l'écran, les actionneurs électriques (108, 109, 110, 111) sont commandés pour élever les coins respectifs du cadre (101, 201, 301, 401).

15. Méthode selon l'une quelconque des revendications précédentes 10 à 14, dans laquelle la commande des actionneurs électriques (108, 109, 110, 111) comprend la commande des actionneurs électriques respectifs (108, 109, 110, 111) pour qu'ils s'abaissent au maximum jusqu'à une position minimale prédéterminée et qu'ils s'élèvent ensuite au maximum jusqu'à une position maximale prédéterminée jusqu'à ce que tous les récepteurs de lumière (104, 105, 204, 205, 304, 305, 404, 405) reçoivent à nouveau la lumière émise respective ou vice versa.
